# EUROPEAN PATENT SPECIFICATION

(11) **EP 1 635 272 B1**
(45) Date of publication and mention of the grant of the patent: **03.06.2009**
(21) Application number: 05270053.1
(22) Date of filing: 07.09.2005
(51) Int. Cl.: G06F 17/30

(54) **Method for evaluating XML twig queries using index structures and relational query processors.**
Ein Verfahren zur Evaluierung von XML Pfadanfragen anhand von Indexstrukturen und relationalen Anfrageprozessoren.
Méthode pour évaluer des requêtes sur des portions arborescentes utiliisant des structures d'index et processeurs de requêtes relationnels.

(30) Priority: 09.09.2004 US 937641
(43) Date of publication of application: 15.03.2006
(60) Divisional application: 07119125.8
(73) Proprietor: AT&T Corp., New York, NY 10013-2412 (US)
(72) Inventor: Korn, Philip, Russell, New York, NY 10012 (US); Koudas, Nikolaos, Toronto, Ontario M5R2W8 (CA); Srivastava, Divesh, Summit, New Jersey 07901 (US); Chen, Zhiyuan, Columbia, Maryland 21044 (US); Gehrke, Johannes, Ithaca, NY 14850 (US); Shanmugasundaram, Jayavel, Ithaca, NY 14850 (US)
(74) Representative: Suckling, Andrew Michael

(56) References cited:
- COOPER B F ET AL: "A fast index for semistructured data" PROCEEDINGS OF THE INTERNATIONAL CONFERENCE ON VERY LARGE DATA BASES, 2001, pages 341-350, XP002303292
- SEO C ET AL: "An efficient inverted index technique for XML documents using RDBMS" INFORMATION AND SOFTWARE TECHNOLOGY, ELSEVIER, AMSTERDAM, NL, vol. 45, no. 1, 1 January 2003 (2003-01-01), pages 11-22, XP004400152 ISSN: 0950-5849
- GOLDMAN R ET AL: "DataGuides: Enabling Query Formulation and Optimization in Semistructured Databases" PROCEEDINGS OF THE INTERNATIONAL CONFERENCE ON VERY LARGE DATA BASES, XX, XX, 26 August 1997 (1997-08-26), pages 436-445, XP002248314
- ERHARD RAHM, GOTTFRIED VOSSEN: "EB UND DATENBANKEN. KONZEPTE, ARCHITEKTUREN, ANWENDUNGEN; PASSAGE" 2003, DPUNKT.VERLAG, HEIDELBERG, DE , GERMANY , XP002362072 ISBN: 3-89864-189-9 * page 226, line 22 - page 230, line 21 * * page 236, line 5 - page 239, line 22 *
- NICOLAS BRUNO, NICK KOUDAS, DIVESH SRIVASTAVA: "Holistic twig joins: optimal XML pattern matching"[Online] June 2002 (2002-06), pages 1-12, XP002362070 ACM SIGMOD'2002 ,Madison, Wisconsin, USA Retrieved from the Internet: URL:http://www.cs.cityu.edu.hk/~leo/paper/ holistic/bks2002-twigjoin.pdf> [retrieved on 2006-01-10]

## Description

### Field of the Invention

The present invention relates to database methods for matching XML twigs in tree-structured XML documents. More particularly, the present invention relates to methods for matching XML twigs in tree-structured XML documents using indexing structures and techniques. Still more particularly, the present invention relates to methods for matching XML twigs in tree-structured XML documents using indexing structures and techniques in relational query processors.

### Background of the Invention

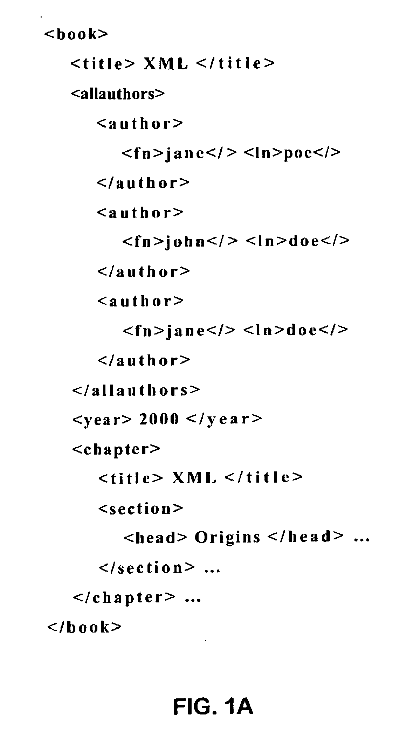

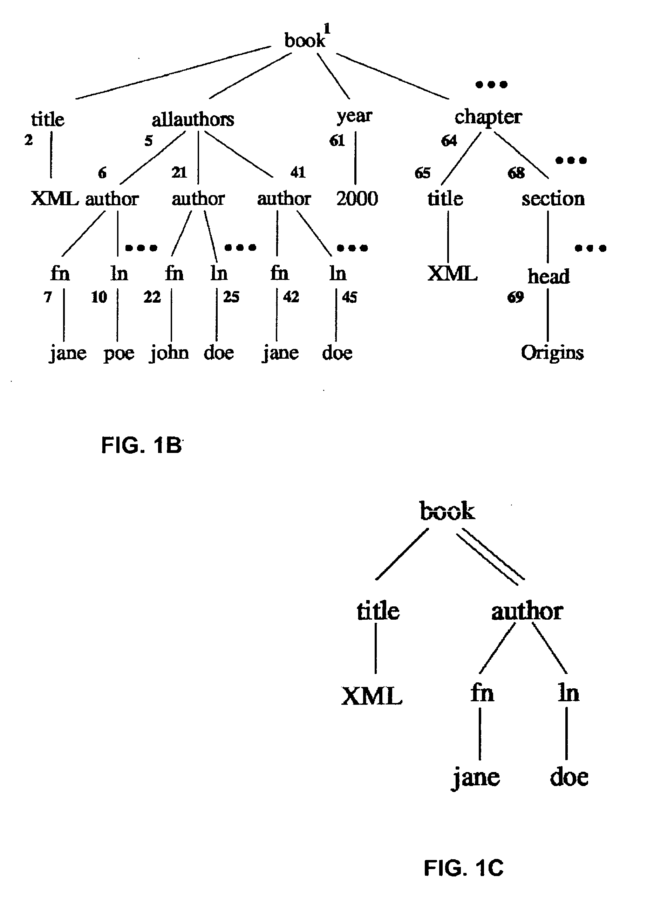

XML (Extensible Markup Language) is emerging as a standard format for data and document storage and interchange on the Internet. XML employs a tree-structured model for representing data. Thus, for example, the XML fragment shown in FIG. 1A may be represented in the tree structure shown in FIG. 1B. Further, (larger) XML document tree structures, including an entire XML document tree, can be viewed as comprising smaller tree-like structures called *twigs.*

Access to XML document data is advantageously achieved using queries. See, for example, "XML-QL: A Query Language for XML," NOTE - XML-QL-19980819, Submission to the World Wide Web Consortium 19-August-1998 available at http://www.w3.org/TR/1998/NOTE-xml-ql-19980819 and "XQuery: A query language for XML" available at http://www.w3.org/TR/xquery . Queries in XML query languages typically specify patterns of selection predicates on multiple elements that have some specified tree-structured relationships. For example, the XQuery path expression:
/book[title= 'XML']//author[fn= 'jane' and ln= 'doe']
matches author elements that (i) have a child subelement *fn* with content jane, (ii) have a child subelement *ln* with content doe, and (iii) are descendants of (root) book elements that have a child title subelement with content XML. This expression can be represented naturally as a node-labelled twig pattern with elements and string values as node labels as shown in FIG. 1C.

Finding all occurrences of a twig pattern in an XML database is a core operation in XML query processing. XML databases have been implemented as relational databases, e.g., as described in D. Florescu and D. Kossman, "Storing and querying XML data using an RDBMS," IEEE Data Engineering Bulletin, 22(3):27-34, 1999; A. Deutsch, M. Fernandez and D. Suciu, "Storing semistructured data with STORED," SIGMOD, 1999; J. Shanmugasundaram, et al., "Relational databases for querying XML documents: Limitations and opportunities," VLDB, 1999; and I. Tatarinov, et al., "Storing and querying ordered XML using a relational database system," SIGMOD, 2002. Other XML databases have been implemented as native XML databases, *e.g.*, as described in R. Goldman, J. McHugh and J. Widom, "From semistructured data to XML: Migrating the Lore data model and query language," WebDB Workshop, 1999; J. Naughton, et al., "The Niagara Internet Query System," IEEE Data Engineering Bulletin, 24(2), 2001; and Univ. of Michigan, "The TIMBER system," available at http://www.eecs.umich.edu/db/timber/. Each of the papers cited in this paragraph is hereby incorporated by reference as if set forth in its entirety herein.

Prior approaches to querying of XML documents to find occurrences of twigs have used a variety of well-known techniques, and combinations thereof. Such techniques include *indexing,* as described, for example, in R. Goldman and J. Widom, "DataGuides: Enabling query formulation and optimisation in semistructured databases," VLDB, 1997; T. Milo and D. Suciu, "Index structures for path expressions," ICDT, 1999; B. F. Cooper, et al., "A fast index for semistructured data," VLDB, 2001; C.-W. Chung, J.-K. Min and K. Shim, "APEX: An adaptive path index for XML data," SIGMOD, 2002; and R. Kaushik, et al., "Covering indexes for branching path queries," SIGMOD, 2002. Each of the papers cited in this paragraph is hereby incorporated by reference as if set forth in its entirety herein.

Another technique used in querying XML documents is that of *link traversal, e.g.,* as described in J. McHugh and J. Widom, "Query optimisation for XML," VLDB, 1999; and T. Grust, "Accelerating XPath location steps," SIGMOD, 2002. Yet other well-known techniques employed in XML document querying include so-called *join techniques,* as described, e.g., in C. Zhang, et al., "On supporting containment queries in relational database management systems," SIGMOD, 2001; S. Al-Khalifa, et al., "Structural joins: A primitive for efficient XML query pattern matching," ICDE, 2002; N. Bruno, N. Koudas and D. Srivastava, "Holistic twig joins: Optimal XML pattern matching," SIGMOD, 2002; and Q. Li and B. Moon, " Indexing and querying XML data for regular path expressions," VLDB,2001. Each of the papers cited in this paragraph is hereby incorporated by reference as if set forth in its entirety herein.

While these and other prior efforts have proven useful for certain XML query applications, remaining problems and limitations in this art include developing index structures that can support the efficient evaluation of XML *ad hoc,* recursive, twig queries using a relational database system. By efficient, we mean that every fully specified, single-path XML query (without any branches and arbitrary recursion) should be answerable using a single index lookup; in particular, potentially computationally complex and expensive join operations should be avoided. By *ad hoc* queries, we mean that the index structures should be able to perform well even if the expected query workload is unknown; this feature is especially important for semi-structured databases, where user queries may be exploratory. Support for recursive queries means that the index structures should support queries having "//" relationships, *i.e.,* ancestor-descendant relationships of unbounded depth, efficiently - though not necessarily in a single lookup. Support for twig queries means that the index structures should be able to process branching path queries without significant additional overhead - compared to single-path queries. Since XML data promises to commonly be stored in relational database systems in the future, index structures should be easily implemented in existing relational database systems. Such index structures should also be tightly integrated with relational query processors.

In particular, it has been found that previously proposed XML path indices, relational join indices, and object-oriented path indices, address, at most, aspects of the identified problems in isolation. That is, methods using prior art index structure do not address all of the above-identified issues within a unified framework. Further, some existing index structures require capabilities, such as special index structures or join algorithms, that are not available in present commercially available relational query systems. Other prior XML query methods use existing relational access methods in unconventional ways that cannot be tightly integrated with relational query processors.

A first aspect of the present invention provides a computer-implemented method for indexing a tree-structured database in an electronic database system storing a plurality of electronic XML documents, the tree-structured database comprising an ordered plurality of nodes, said nodes in the tree-structured database being selected from the group comprising element nodes, attribute nodes and value nodes, each of said nodes in the tree-structured database having a respective node id, said nodes in the tree-structured database being selectively connected by edges, a data path in the tree-structured database comprising one or more edges, the tree-structured database including at least one root node, a plurality of leaf nodes, and a plurality of root-to-leaf paths, each data path in the tree-structured database comprising a schema path and, when a data path in the tree-structured database reaches a leaf node, a leaf value, said element nodes having respective tags, said attribute nodes having respective attribute names, said schema path comprising only element tags and attribute names, the method comprising:
generating in a relational database system a set of relational representations of data paths that are subpaths of said root-to-leaf paths, each said data path having a representation in said set of representations being associated with the node at which it is rooted, said representations of subpaths included in said set of representations comprising SchemaPath, LeafValue, and IdList information for each respective subpath, where SchemaPath comprises element tags and attribute names present along said data path, where LeafValue comprises values of leaves, where IdList is the list of all node ids along the schema path, except for the HeadId, and where HeadId is the node id of the node at the start of the data path,
after generating said set of relational representations, generating an index based on the concatenation of LeafValue and the reverse of SchemaPath, said index returning at least a portion of said IdList for each data path having a relational representation in said set of representations, and
storing said index for use with said relational database system.

The above limitations of the prior art are overcome, and a technical advance is achieved in accordance with the present invention, as described below in illustrative embodiments.

In particular, illustrative embodiments of the present invention provide index structures that support the efficient evaluation of XML *ad hoc,* recursive, twig queries using a relational database system. Moreover, these and other advantages accrue in embodiments providing performance improvement measures of up to orders of magnitude over existing indices used in methods for evaluating twig queries and recursive queries, while providing competitive performance for fully specified, single-path queries.

In achieving these improvements, the present invention provides a unified framework for XML path indices, which framework includes most existing indices. In addition, present inventive embodiments include the use of two novel index structures, referred to as ROOTPATHS and DATAPATHS, that prove highly effective for the evaluation of *ad hoc,* recursive, twig queries.

Techniques are also provided by embodiments of the present invention for employing the family of index structures using access methods of a relational database system, including tight integration with relational query processors.

Examples are presented demonstrating advantages of present inventive indexing and querying techniques over existing XML and object-oriented path indices, as well as those employing relational join indices. Performance tradeoffs, e.g., involving required index space and twig matching time, are presented for particular illustrative embodiments of the present invention.

### Brief Description of the Drawing

The present invention, and illustrative embodiments thereof, as well as the manner of practicing the present invention will be more completely understood upon consideration of the following detailed description when read in combination with the attached drawing, wherein:
FIG. 1A shows an illustrative XML document;
FIG. 1B shows a tree structure representative of the document of FIG. 1A;
FIG. 1C shows a query twig pattern matching a portion of the tree of FIG. 1B;
FIG. 2 illustrates a 4-ary relational representation of the data tree of FIG. 1B;
FIG. 3 illustrates members of a family of indices;
FIG. 4 illustrates the 4-ary relation of FIG. 2 as adapted for ROOTPATHS;
FIG. 5 illustrates the 4-ary relation of FIG. 2 as adapted for DATAPATHS;
FIG. 6 illustrates schema path compression in the 4-ary relation;
FIG. 7A shows illustrative single-branch and twig queries useful in described experiments;
FIG. 7B illustrates XMark branching twig queries with one recursion;
FIG. 8A shows an illustrative system implementation for practicing embodiments of the present invention.
FIG. 8B is a flowchart showing illustrative operations used in embodiments of the present invention.
FIG. 9 is a table providing illustrative space requirements (in MB) for a variety of index structures;
FIG. 10 is a table illustrating a variety of query characteristics;
FIGs. 11A and 11B show the performance of various index structures;
FIG. 12A shows performance for twig queries with selective branches;
FIG. 12B shows performance for twig queries with selective and unselective branches;
FIG. 12C shows performance for twig queries with unselective branches;
FIG. 12D shows performance for twig queries with low branch points;
FIG. 13A shows performance for XMark queries having a "//" as a branch point, with selective and unselective branches;
FIG. 13B shows performance for XMark queries having a "//" as a branch point, with unselective branches.

### Detailed Description

### Preliminaries and Problem Definition

### Data Model and Query Twig Patterns

An XML database is a forest of rooted, ordered, labelled trees, each *node* corresponding to an *element* (an element node), *attribute* (an attribute node), or a *value* (a value node). *Edges* in such trees representing (direct) element-subelement, element-attribute, element-value, and attribute-value relationships. *IDREFs* (see, *e.g.*, Extensible Markup Language (XML) 1.0 (Second Edition) *W3C Recommendation* 6 October 2000) are encoded and queried as values in XML. A link through an IDREF is treated as a value-based join of the IDREF value(s) and the (corresponding) ID value(s), and is not considered part of the XML tree structure. Non-leaf nodes correspond to elements and attributes, and are labelled by tags or attribute names, while leaf nodes correspond to values. The sample XML document of FIG. 1A, has the illustrative tree representation shown in FIG. 1B. Each non-leaf node in FIG. 1B is illustratively associated with a unique numeric identifier shown beside the respective node.

Queries in XML query languages like XQuery and XML-QL, cited above, and Quilt, described in D.D. Chamberlin, J. Robie and D. Florescu, "Quilt: An XML query language for heterogeneous data sources," *WebDB Workshop,* 2000, make fundamental use of (node-labelled) twig patterns for matching relevant portions of data in the XML database. The node labels include element tags, attribute names, and values; edges of the trees are either parent-child edges (depicted in FIG. 1C by a single line) or ancestor-descendant edges (depicted there by a double line). For example, the XQuery path expression given above is illustratively represented as the twig pattern in FIG. 1C. Note that an ancestor-descendant edge is needed between the *book* element and the *author* element, *i.e.,* these elements are not related as parent-child. The query twig pattern of FIG. 1C would match the data tree in FIG. 1B. For purposes of illustration only, all values in this detailed description are presented as strings, and only equality matches on the values are allowed in the query twig pattern - though no such limitations are necessary in embodiments of the present invention.

In general, given a query twig pattern Q, and an XML database D, a match of Q in D is identified intuitively by a mapping from nodes in Q to nodes in D, such that: (i) query node tags/attribute-names/values are preserved under the mapping, and (ii) the structural (parent-child and ancestor-descendant) relationships between query nodes are satisfied by the corresponding database nodes. Finding all matches of a query twig pattern in an XML database is clearly a core operation in XML query processing, both in relational implementations of XML databases, and in native XML databases.

### Subpaths and PCsubpaths

A twig pattern consists of a collection of subpath patterns, where a subpath pattern is a subpath of any root-to-leaf path in the twig pattern. For example, the twig pattern "/book [title = 'XML'] //author [fn = 'jane' and In = 'doe'] " consists of the paths "/book [title = 'XML']", "/book author [fn = 'jane']", and "/book/ /author [In = 'doe']". Each of these is a subpath pattern, as are "/book/title" and "//author [fn = 'jane']".

A subpath pattern is said to be a parent-child subpath (or PCsubpath) pattern if there are no ancestor-descendant relationships between nodes in the subpath pattern (a "//" at the *beginning* of a subpath pattern is permitted). Thus, among the above subpath patterns, each of "/book [title = 'XML']", "/book/title," and "//author [fn = 'jane']" is a PCsubpath pattern. However, neither "/book//author [fn = 'jane']" nor "/book//author [In = 'doe']" is a PCsubpath pattern. The importance of making this distinction will become clear when we formally define the indexing problems addressed below.
*Problem: PCsubpath Indexing*

To answer a query twig pattern Q, it is essential to find matches to a set of subpath patterns that "cover" the query twig pattern. Once these matches have been found, join algorithms can be used to "stitch together" these matches. For example, one can answer the query twig pattern in FIG. 1C by finding matches to each of the subpath patterns "/book [title = 'XML'] ", "//author [fn = 'jane']" and "//author [In = 'doe'] ", and combining these results using *containment joins.* Containment joins are well-known and are described, for example, in the above-cited Zhang, *et al.,* Al-Khalifa, *et al.,* and Bruno, *et al.* papers.

Alternatively, if there are few XML books, one could first find all book ids matching "/book [title = XML]". Then, one could use the book ids to selectively probe for authors that match the subpath patterns "//author [fn = 'jane']" and "//author [In = 'doe']" rooted at each book id matching "/book [title = XML]." Note that, in this alternative approach, matches to the branching point *book* are needed, even though this node is not in the result of the query twig pattern. It is easy to see that any query twig pattern can always be covered by a set of PCsubpath patterns. From these observations it proves useful to consider two indexing problems addressed below:

Problem *FreeIndex:* Given a PCsubpath pattern P with n node labels and an XML database D, return all n-tuples (d1 , ... , dₙ) of node ids that identify matches of P in D, in a single index lookup.

An index solving the *FreeIndex* problem can be used to retrieve ids of branch nodes or nodes in the result. For example, consider query "/book/allauthors/author [fn = 'jane' and In = 'doe']." A lookup for the PCsubpath "/book/allauthors/author [fn = 'jane']" in the database in FIG. 1B gives the id lists ([1,5,6,7], [1,5,41,42]), and author-id is the penultimate id in each of the lists. Similarly, a lookup on "/book/allauthors/author [In = 'doe']" gives the id lists ([1,5,21,25], [1,5,41,45]). Since author id 41 is present in both cases, the selected author can be returned via merge or *hash join,* both of which are commonly supported by relational query processors.

Problem *BoundIndex:* Given a PCsubpath pattern P with n node labels, an XML database D, and a specific database node id d, return all n-tuples (d1, ... , dₙ) that identify matches of P in D, rooted at node d, in a single index lookup.

Solutions to the *BoundIndex* problem in accordance with embodiments of the present invention are useful because they allow the index-nested-loop join processing strategy available in relational database management systems to be used. For example, given query "/book [title= `XML']//author [In = 'doe']", and an evaluation of the PCsubpath "/book [title= 'XML']" yielding the book id d = 1. Then an index that can solve the BoundIndex problem can be used in index-nested-loop join to return the "author" id under "book" id 1 and satisfying the PCsubpath pattern "//author[ln ='doe]." The FreeIndex problem can be seen as a special case of the BoundIndex problem when the root node id d is not given.

### A Family of Indices

The following descriptions present a unified framework defining a family of indices useful in methods for solving the FreeIndex and BoundIndex problems. Additionally, this framework, in its broader aspects, covers most existing path index structures. Still further, this section describes novel index structures that prove useful in illustrative embodiments of the present invention; these structures include ROOTPATHS and DATAPATHS.

### Framework

It proves useful initially to introduce some notation and definitions to be used in the following descriptions. Data paths in XML data comprise two parts: (i) a *schema path,* which consists solely of schema components, *i.e.*, element tags and attribute names, and (ii) a *leaf value* as a string if the path reaches a leaf. Schema paths can be dictionary-encoded using special characters (whose lengths depend on the dictionary size) as designators for the schema components.

In order to solve the BoundIndex problem (which, as previously noted, is a more general version of the FreeIndex problem) in the context of a relational query processor, it proves advantageous to explicitly represent data paths that are arbitrary subpaths (not just prefix subpaths) of root-to-leaf paths, and associate each such data path with the node at which the subpath is rooted. Such a relational representation of all the data paths in an XML database will, in accordance with an aspect of illustrative embodiments of the present invention, assume a 4-ary relational representation: (HeadId, SchemaPath, LeafValue, IdList). Here, HeadId is the id of the start of the data path, and IdList is the list of all node identifiers along the schema path, except for the HeadId.

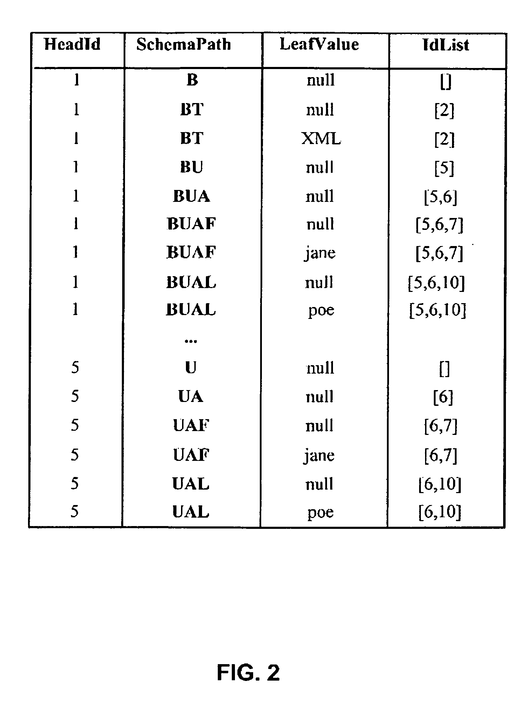

As an example, a fragment of the 4-ary relational representation of the data tree of FIG. 1B is given in FIG. 2, where the element tags have been encoded using boldface characters as designators, based on the first character of the tag, except for allauthors which uses U as its designator.

We define the family of indices for solving the FreeIndex and BoundIndex problems as follows:

Family of Indices: Given the 4-ary relational representation of XML database D, the family of indices include all indices that:
1. store a subset of all possible SchemaPaths in D;
2. store a sublist of IdList;
3. index a subset of the columns HeadId, SchemaPath, and LeafValue.

Given a query, the index structure probes the indexed columns in (3) and returns the sublist of IdList stored in the index entries.

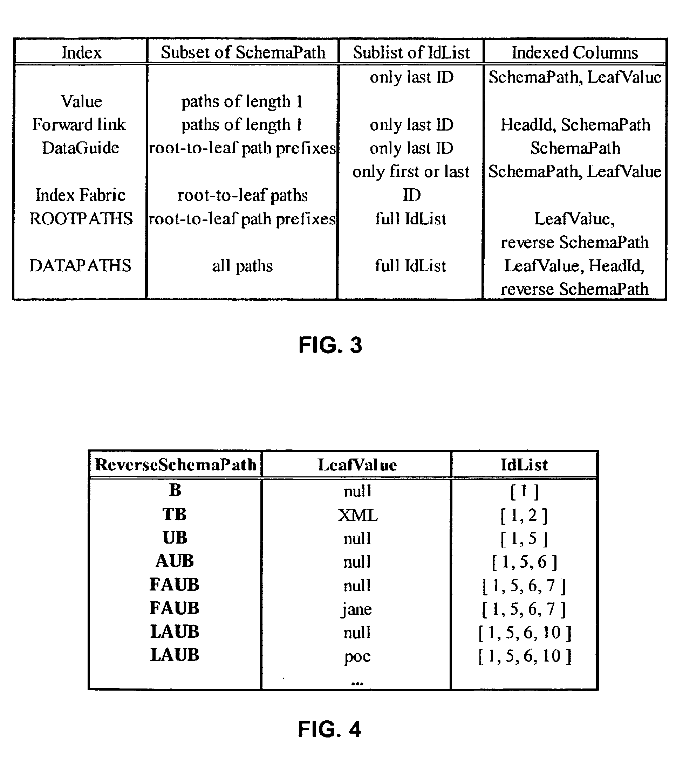

Many existing indices fit in this framework, as summarized in FIG. 3. For example, the value index in Lore (e.g., as described in R. Goldman, J. McHugh and J. Widom, "From semistructured data to XML: Migrating the Lore data model and query language," *WebDB Workshop,* 1999) returns the ID of an attribute or element given its tag name and value. This index may be viewed as a B+-tree index on the SchemaPath and LeafValue, where SchemaPath consists of paths with length one (i.e., the tag name), and the last ID in IdList is returned.

The *forward link* index in Lore, *supra,* returns the ID of an element or attribute given its tag name and the ID of its parent. This may be viewed as a B+-tree index on HeadId and SchemaPath, where HeadId is the start ID of the path, SchemaPath has length one, and the last ID in IdList is returned.

Similarly, the DataGuide (e.g., R. Goldman and J. Widom, "DataGuides: Enabling query formulation and optimisation in semistructured databases," *VLDB,* 1997) returns the last ID of the IdList for every root-to-leaf prefix path.

Finally, the IndexFabric approach described, for example, in B.F. Cooper, *et al.,* "A fast index for semistructured data," *VLDB, 2001,* returns the ID of either the root or the leaf element (first or last ID in IdList), given a root-to-leaf path and the value of the leaf element.

It is important to note that in our implementation of these indices, we only consider relational adaptations (using B+-trees) because some space-efficient structures such as Patricia tries used in the last-cited Cooper, *et al.* paper are not present in current commercial relational databases. However, since many commercial systems such as DB2 implement prefix compression on indexed columns to reduce the key size, regular B+-tree indices are also space efficient when the schema path lengths are not too long.

Other indices belonging to the family described above have not been described in the prior literature. For example, all existing indices return the first or last IDs in the IdList, but do not return other IDs. Also, no prior index provides both HeadID and SchemaPaths with length larger than one. Consequently, none of the existing index structures can answer the FreeIndex or BoundIndex problem with a single index lookup. For example, consider the query "/book/allauthors/author[fn =jane ' and In =doe]". The FreeIndex problem requires the "author" ID given "/book/allauthors/author[fn =jane]". Using Index Fabric, one can find all IDs of "fn" satisfying "/book/allauthors/author[fn =jane]", but the author ID is not returned.

We now present two novel index structures in this family and in accordance with implementations of the present invention. These index structures are referred to as ROOTPATHS and DATAPATHS and each is summarized in terms of a respective Subset of SchemaPath, Sublist of IdList and Indexed Columns - as shown in FIG. 3. The ROOTPATHS and DATAPATHS index structures will be seen to be capable of providing one-index-lookup answers to the FreeIndex and BoundIndex problems, respectively.

### ROOTPATHS Index

ROOTPATHS is a B+-tree index on the concatenation of LeafValue and the reverse of SchemaPath, and it returns the complete IdList. Only the prefixes of the root-to-leaf paths are indexed (i.e., only those rows with HeadID = 1).

Differences between ROOTPATHS and the Index Fabric techniques include:
(i) ROOTPATHS stores prefix paths in addition to root-to-leaf paths. This extension efficiently supports queries that do not go all the way to a leaf (e.g., "/book").
(ii) ROOTPATHS stores the entire IdList, *i.e.,* all node identifiers along the schema path, as opposed to storing only the document-id or leaf-id of the path as is done in the Index Fabric. This IdList extension proves useful in evaluating branching queries efficiently when using relational query processors - because it gives the ids of the branch points in a single index lookup. Such additional functionality is achieved in some cases at the cost of additional required space.

For ease of presentation, this detailed description employs node identifiers having simple numeric values (see, e.g., FIG. 1B). Such node identifiers suffice for illustrating operations such as sort-merge joins and index-nested-loop joins presented subsequently. Alternative identifiers such as those in C. Zhang, *et al.,* "On supporting containment queries in relational database management systems," *SIGMOD,* 2001, can be used, to enable containment queries, as will be clear to those skilled in the art.

We now show how a regular B+-tree index can be used to support PCsubpath queries with initial "//". It proves advantageous to employ suffix matches on the SchemaPath attribute (with exact matches on the LeafValue attribute, if any). It should be noted that, although B+-trees are not necessarily efficient at suffix matches, but are very efficient for prefix matches. Consequently, by reversing the SchemaPath values to be indexed (e.g., FAUB instead of BUAF in FIG. 2), a regular B+-tree can be used to support suffix matches. This approach has previously been used in the string indexing community for matching string suffixes.

FIG. 4 shows an adaptation of the 4-ary representation of FIG. 2 that proves useful in connection with the ROOTPATHS index. As shown, the HeadID column can be dropped since only paths starting from the root are stored (*i.e.,* all tuples have HeadID = 1, so HeadID does not have to be explicitly stored). Further, SchemaPaths are reversed in FIG. 4, as compared to those in FIG. 2, to enable the efficient evaluation of PCsubpath queries with an initial "//".

A B+-tree index on the concatenation LeafValue ReverseSchemaPath in the ROOTPATHS relation is advantageously used to directly match PCsubpath patterns with initial recursion, such as "//author[fn= 'jane']" in a single index lookup. This is done by looking up on the key ('jane', FA*). Similarly, PCsubpath patterns with initial recursion, but without a condition on the leaf value, such as "//author/fn" can be looked up on the key (null, FA*). Neither the Index Fabric nor the DataGuide techniques can support the evaluation of such queries efficiently. Of course, fully specified PCsubpaths (without an initial "//") can also be handled using this index.

### DATAPATHS Index

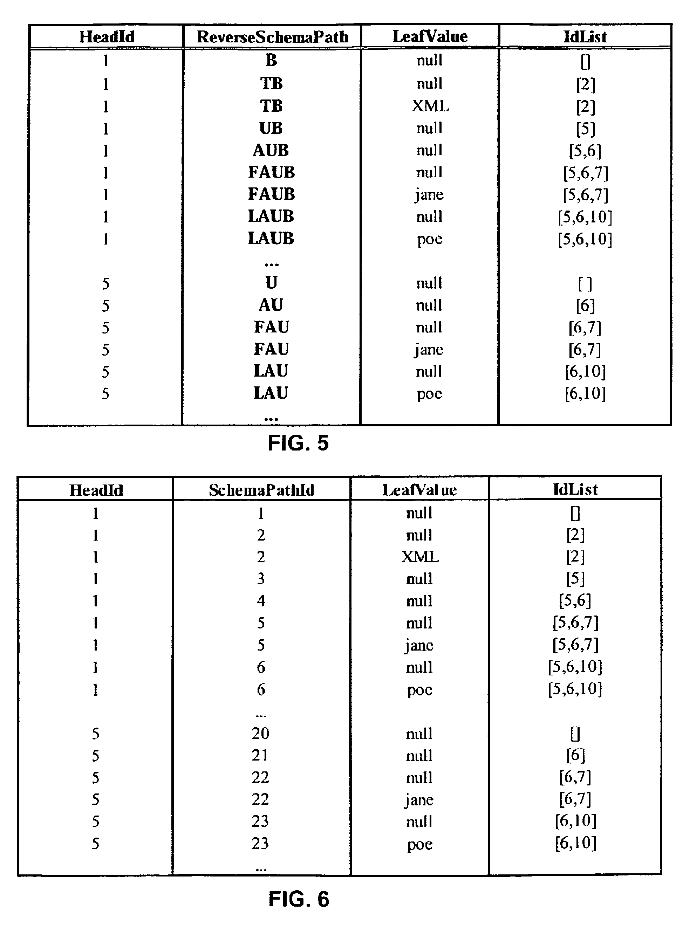

The DATAPATHS index is a regular B+-tree index on the concatenation of HeadId, LeafValue and the reverse of SchemaPath (or the concatenation LeafValue -HeadId- ReverseSchemaPath), where the SchemaPath column stores all subpaths of root-to-leaf paths, and the complete IdList is returned. FIG. 5 shows the adapted 4-ary representation for DATAPATHS (including ReverseSchemaPath).

DATAPATHS index can solve both the FreeIndex and the BoundIndex problems in one index lookup. In some illustrative embodiments, it proves convenient to add a virtual root as the parent of all XML documents, so that the index can solve FreeIndex as well as BoundIndex. In such embodiments, HeadId advantageously is the virtual root. For example, consider a query "/book//author[fn ='jane' and In = 'doe']". One can use the DATAPATHS index to probe all book-ids that match "/book", which is a FreeIndex problem. Using these book-ids as HeadId values, one advantageously solves the BoundIndex problem by probing author-id matches to each of the two PCsubpaths "//author[fn ='jane']" and"//author[ln = 'doe']", rooted at the book-ids. Finally, the intersection of these two sets of author-id matches is the answer of the query. Alternative plans, enabled by the DATAPATHS index, are also possible. Note that processing of the initial recursion in these PCsubpaths profits from the use of ReverseSchemaPath in a BoundIndex context.

The DATAPATHS index is generally larger than a ROOTPATHS index for a given XML database, but proves robust in solving BoundIndex problems in one index lookup.

Lossless and lossy compression techniques are discussed in the next section.

### Compressing ROOTPATHS and DATAPATHS

ROOTPATHS and DATAPATHS indices can be quite large, depending on the size and depth of the XML database because node ids are duplicated in IdList and SchemaPaths are duplicated in DATAPATHS.

We explore lossless and lossy compression techniques for reducing size of ROOTPATHS and DATAPATHS indices. The lossless compression schemes do not negatively impact query functionality (i.e., exactly the same query plan can be used), while lossy compression schemes trade space for query functionality. Also, for all compression techniques, there is a tradeoff as between decompression overhead at run time and space savings. For example, dictionary-encoding can be used to compress Leaf Values. However, a dictionary used for this purpose is likely to be quite large and may not fit in memory, thereby incurring input/output (I/O) overhead for index lookup. While such dictionary-encoding techniques will prove advantageous in many compression applications, the present detailed description will focus on compressing IdList, HeadId and SchemaPath.

### Compressing IdLists

The IdList attribute of ROOTPATHS and DATAPATHS maintains a list of node identifiers, illustratively generated using depth-first or breadth-first numbering, for the nodes in the schema path. One lossless compression technique is to store only the offset of each identifier with respect to the previous identifier in the IdList, as is done in compressed inverted indices in IR. This corresponds to a differential encoding of the IdList, and is likely to lead to a significant savings in space because the ids in the list are strongly correlated by parent-child relationships.

Knowledge about a query workload enables pruning of IdLists in some cases. For example, a node that is never returned as part of a result for any twig pattern in the workload, and is not a branching point of any twig pattern, can be eliminated from the IdList (i.e., can be replaced by a NULL). An extreme example is that occurring when a query workload contains only simple rooted path patterns (*i.e.*, no branching or recursion) that return the path root nodes. This illustratively occurs when filtering XML documents based on the existence of a pattern, rather than returning each pattern match; this is the query class handled by the Index Fabric. In such cases, each IdList in ROOTPATHS contains one node. This compression of IdLists results in loss in functionality. One can only match queries in the workload, and the index is not useful for *ad hoc* path patterns.

### Compressing SchemaPaths

In a well-structured XML database, the number of distinct schema paths is quite small compared to the number of root-to-leaf paths. For example, the DBLP database has 235 distinct schema paths, and the XMark database (see http://monetdb.cwi.nl/xml) has 902 distinct schema paths. This naturally suggests that one can readily dictionary-encode each of the schema paths, representing them as small integer ids. The effect of such an encoding on the 4-ary relation of FIG. 2 is depicted in FIG. 6, where the SchemaPath attribute has been replaced by the SchemaPathId attribute.

This compression of schema paths, however, results in some loss in functionality. One can no longer match a PCsubpath pattern that begins with a "//", e.g., "//author/fn[. = jane]". This loss of functionality arises because the schema path identifier is indivisible, and one cannot compute its prefixes or suffixes. Thus, reducing the space used by the index can result in an increase in query evaluation time, by eliminating some (potentially) efficient query processing plans.

### Pruning HeadIds

While a FreeIndex lookup is useful for any PCsubpath pattern, a BoundIndex lookup is useful only when one knows a set of HeadId values, say, because of a previous index lookup of a PCsubpath in the twig pattern, and the optimiser's choice of index-nested-loops as the join algorithm. This observation provides a basis for reducing the size of DATAPATHS.

If we know the query workload, then we can prune out entries from the DATAPATHS index whose HeadId corresponds to a data node that is not a query branch point. This technique is sensitive to the query workload. One can still use the index to match queries not in the workload (using IdLists), but use of the index-nested-loop join strategy will not be possible.

### Experimental Evaluation

We now present an experimental evaluation of the ROOTPATHS and DATAPATHS indices with existing index structures in the same family. We also compare our approach against Access Support Relations (ASR) discussed, e.g., in A. Kemper and G. Moerkotte, "Access support in object databases," SIGMOD, 1990; and Join Indices, discussed in P. Valduriez, "Join indices," ACM TODS, 12(2), 1987, which were originally proposed for indexing paths in object-oriented and relational databases, respectively. We evaluated the following features of the new index structures: benefits of (i) indexing both SchemaPath and LeafValue, (ii) returning full IdLists, reversing SchemaPath for recursive queries, (iii) supporting index-nested-loop join; and the effects of space compression.

### Experimental Setup

Since XML data may often be stored in relational database systems, we chose to run our experiments on top of IBM's DB2 relational database. We used both a real DBLP (see, *e.g.,* http:/www,informatik.uni-trier.de/~ley/db/index.html), which is shallow; and XMark, a synthetic, deep data set (see http://monetdb.cwi.nl/xml) for our experiments. We assume the XML data is stored in an Edge Table (as described, for example, in Florescu (1999), *supra,* which stores every edge in the XML data, and we assume each node is assigned a unique id. (For other storage formats where the XML data is stored in multiple tables, we assume each node is assigned a unique id within a table, and the node id stored in all index structures consists of a table id and the node id.)

We now describe the details of illustrative hardware and relational query processing software embodiments as well as illustrative experimental results, including comparison performance with prior techniques.

### Database Settings and Query Workload

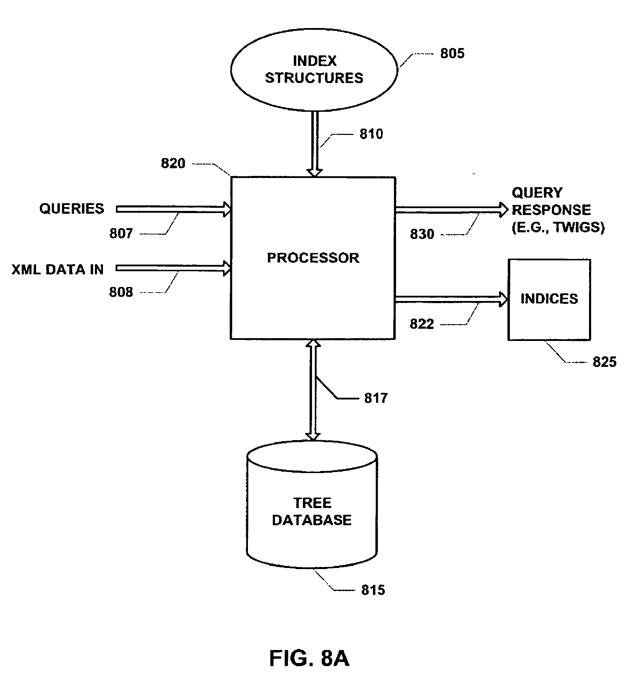

FIG. 8A shows an illustrative implementation for practicing embodiments of the present invention. For purposes of illustration, a previously cited 100MB scaled XMark data set and 50 MB DBLP data set are used with illustrative indexing techniques - including present inventive indexing techniques. These data sets are shown for functional purposes as being stored in separate tree database 815, but in many cases will conveniently be stored in part or whole, in the main memory of processor 820. Performance comparisons between prior indexing structures and methods and those of the present invention were performed using a standard 1.7 GHz Pentium® computer running Windows® 2000; the last mentioned processor (computer) is shown as 820 in FIG. 8A. Computer 820 illustratively includes 1GB of main memory and a single 37 GB hard disk, as well as typical input output and peripheral elements (not shown).

FIG. 8A also shows index structures 805 reflecting the several previously known indexing structures and those described herein in connection with embodiments of the present invention. The previously known structures are well known and are described in many prior publications, including those cited herein. Modifications and extensions of such prior indexing structures are described in this application. While shown as a separate entity 805, it will be understood that indexing structures conveniently appear as control programs and data for developing corresponding indices shown as 825 in FIG. 8A. In practice, both index structures 805 and indices 825 are in many cases advantageously stored in main memory of processor 820.

In operation, XML data are entered on input 807 in FIG. 8A for populating the XML database 815. These data are then indexed in accordance with index structures 805 to produce indices 825. For purposes of conducting comparisons between various indexing structures and resulting indices, a plurality of such indexing structures 805 and indices 825 may be applied and stored, but the superior performance provided by present inventive techniques will prove advantageous for many applications and data sets.

Also input to the system of FIG. 8A are queries shown as applied at input 125. The index structures 805 are used to generate indices of datasets in tree database 815 and such indices are then used in combination with well-known relational database query processing software to generate output results in the form of query responses shown as output at 830. Typically, such output query responses will include all twigs, including recursive twigs of the tree database that match one or more queries. In general, however, the present invention permits efficient identification of desired content in XML data sets in response to relational database system queries.

One illustrative relational database system that may be employed in the system of FIG. 8A is the well known DB2 system, e.g., version 7.2. Experiments were run with a 40MB buffer pool with operating system cache turned off in order to study the effects of using a non-main memory resident data set. It also proved convenient for experimental purposes to turn off the Windows file system cache so that data items evicted from the database buffer pool were not cached in the file system.

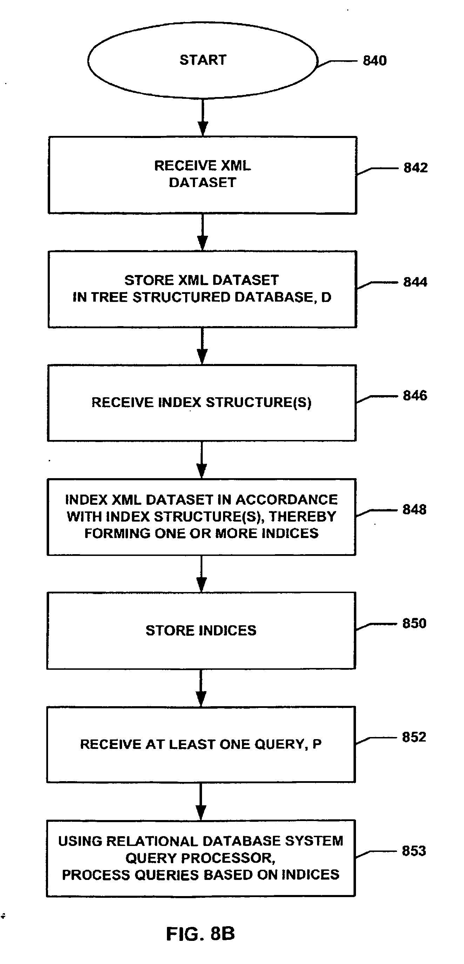

FIG. 8B is a flowchart showing illustrative processing in accordance with embodiments of the present invention. In particular, after starting at 840 in FIG. 8B, the system receives (at step 842) input XML datasets, illustratively of the type represented by the above-noted XMark and DBLP example datasets. These XML data are conveniently stored in a tree-structured database, D, shown as 844 in FIG. 8B. This database will be of the form described above and shown in FIG. 1B. The database content will, of course, be dependent on the XML data input on 808 in FIG. 8A. Input index structures, including the FreeIndex and BoundIndex structures described above, are then received as shown at step 846 in FIG. 8B, illustratively via input 810 shown in FIG. 8A.

Stored XML data in database 815 is then indexed, as shown at 848 in FIG. 8B, and these one or more indices are stored (as indicated at 848 in FIG. 8B). These indices are shown as stored in 825 in FIG. 8A. One or more queries, P, received on 807 in FIG. 8A are then applied to the relational query processor (such as that associated with the well-known DB2 relational database management system) in computer 820. Queries P are processed (853 in FIG. 8B) to yield responses appearing at 830 in FIG. 8A. Query responses are typically all twigs matching P.

We collected detailed statistics on all relations and indices before running our queries. The experimental results reported are the total query execution time of ten independent runs with a warm cache, excluding the query optimisation time. This simulates the case where many read-only XML queries are run concurrently against the data. The results for a cold cache are similar and omitted for space reasons. The cost of translating the XPath query to SQL is considered part of the query optimisation cost. In all experiments, the cost of translating a tag name to the internal representation is negligible because the translation table can fit in a single page and can be assumed to always reside in memory.

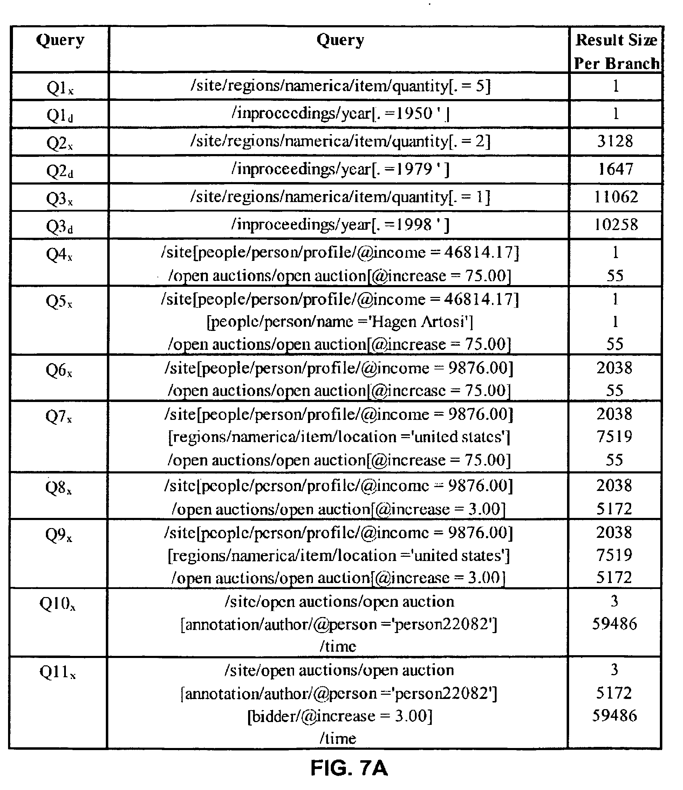

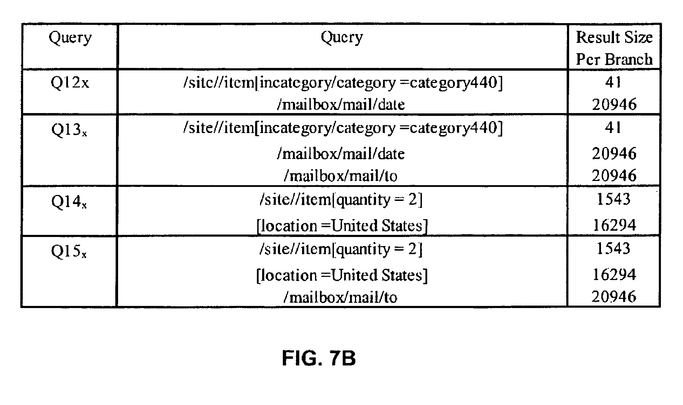

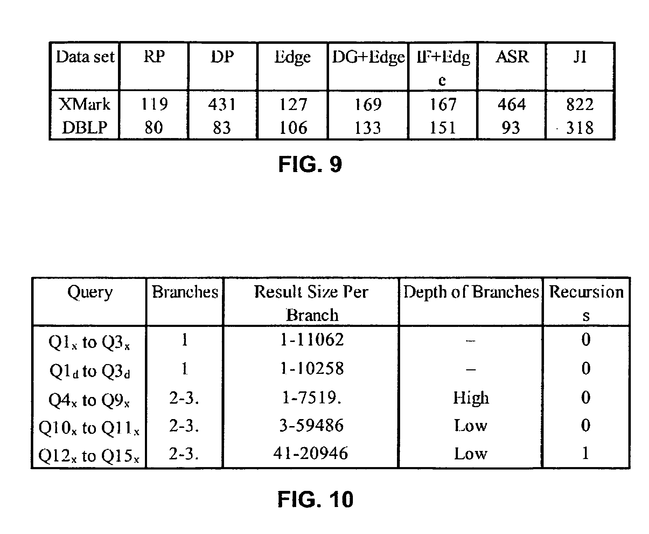

We used a workload of XPath queries, and varied the parameters of the query - such as the number of branches, the selectivity of each branch, and the depth of branches. FIG. 10 summarizes these queries. The details of individual queries can be found in FIGs. 7A and 7B.

### Details of Relational Implementation

We implemented seven different indexing strategies for our experiments: ROOTPATHS (RP) and DATAPATHS (DP) - both with differential encoding on IdList, simulated DataGuide (DG) and simulated Index Fabric (IF) using B+-tree index, Edge Table index with the value index, forward link, and backward link index as described in J. McHugh and J. Widom, "Query optimisation for XML," VLDB, 1999 (these indices are the most useful indices reported in Florescu, *et al.,* 1999), Access Support Relations (ASR), and Join Indices (JI).

Since commercial database systems (such as DB2 and Oracle) do not currently implement Patricia trie, we use regular B+-tree indices in this paper to simulate Index Fabric. Many commercial systems such as DB2 has implemented prefix compression on indexed columns to reduce the key size. Thus when the schema paths are not too long, regular B+-tree indices are also space efficient.

The original proposals for ASRs (Kemper, 1999, *supra*) and Join Indices (Valduriez, 1987, *supra*) present techniques for materializing a subset of the paths given a query workload. However, since our focus is on evaluating *ad hoc* queries, we implemented ASRs and Join Indices by materializing all relevant paths present in the data.

Since the DataGuide and the Index Fabric do not store IdLists, they cannot be directly used to answer twig queries. Consequently, we used the DataGuide/Index Fabric to look up ids at the end of root-to-leaf paths, then we used (possibly many lookups in) the reverse link index on Edge Table to determine the branch point ids from the leaf ids. Reverse DataGuide (see, H. Liefke, D. Suciu, "XMill: an Efficient Compressor for XML Data," *SIGMOD,* 2000) cannot be used for this purpose, since it can only return branch point ids given the leaf to root path. We also experimented with various query plans for branching queries, where DataGuide and Index Fabric were used only for some of the query branches, and the link and value indices were used for other branches. We chose the best among these as characterizing the performance of the DataGuide and Index Fabric approaches. We refer to these combined strategies as DG+Edge and IF+Edge.

We could not use structural join algorithms since none of these algorithms has been implemented in commercial database systems.

FIG. 9 shows space requirement for the various index structures. The space for DATAPATHS and ROOTPATHS is the result after differential-encoding on IdList. Since XMark data is more deeply nested than DBLP, the space requirements for DATAPATHS increase proportionally.

### Experimental Results

We first compare use of our new index structures with existing XML index structures. We then present a comparison with ASRs and Join Indices.

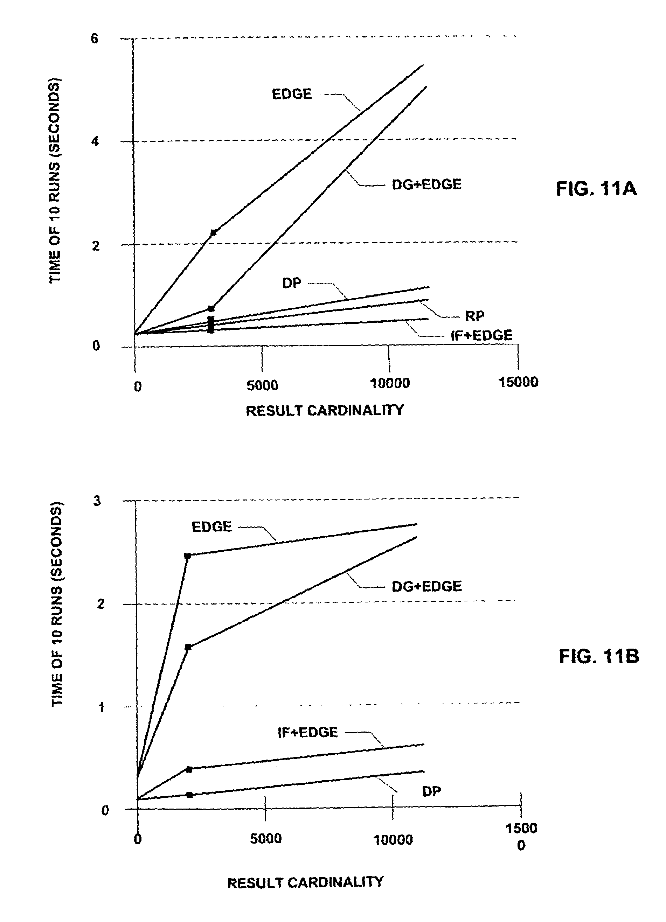

We examine the benefit of indexing schema paths and data values together by choosing a single fully-specified path query, and varying it from highly selective (Q1_{d}, Q1ₓ,), to moderately selective (Q2_{d}, Q2ₓ,), to relatively unselective (Q3_{d}, Q3ₓ,). FIGs. 11A and 11B show the performance of various index structures (XMark in FIG. 11A, DBLP in FIG. 11B). The Index Fabric and ROOTPATHS are among the best approaches, while DATAPATHS is only slightly worse. Meanwhile the Edge and DataGuide+Edge approaches perform very badly with decreasing selectivity.

The good performance of Index Fabric is expected because it is optimised for simple path queries. ROOTPATHS suffers a slight overhead because it stores IdLists instead of just Ids, and also incurs the cost of invoking a user-defined function to extract the ids. Similarly, DATAPATHS is slightly worse than ROOTPATHS because it has the overhead of storing both IdLists and HeadId.

Edge performs badly because it performs a join operation for each step along the path. As the selectivity of paths decreases, it increases the cost of each join. The bad performance of Edge is a simple justification for using a single index lookup instead of resorting to more expensive joins.

The most interesting aspect of FIGs. 11A and 11B, however, is the bad performance of DataGuide+Edge. The main reason for this behaviour is that schema paths are indexed separately from the data values. Consequently, a separate lookup has to be performed for the schema path (using the DataGuide) and for the data value (using the value index), and the results have to be joined together. As the selectivity of paths decreases, the cost of each join increases, resulting in bad performance.

### Returning IdLists

We now examine the performance benefits of returning IdLists for twig queries. We study three groups of queries, one in which all branches are selective, one in which all branches are unselective, and one in which there are selective and unselective branches. For each group, we vary the number of branches.

We used queries Q4ₓ, (2 branches) and Q5ₓ (3 branches) to evaluate the performance of queries with all selective branches. In addition, we also used a single path selective query (chosen as the first branch common to Q4ₓ, and Q5ₓ) as a baseline for comparison. Similarly, we used Q6ₓ, and Q7ₓ, to evaluate the performance of queries with a mix of selective and unselective branches, and Q8ₓ, and Q9ₓ, for queries with all unselective branches. For all of these queries, the branch point is high in the query. The results for DBLP are similar.

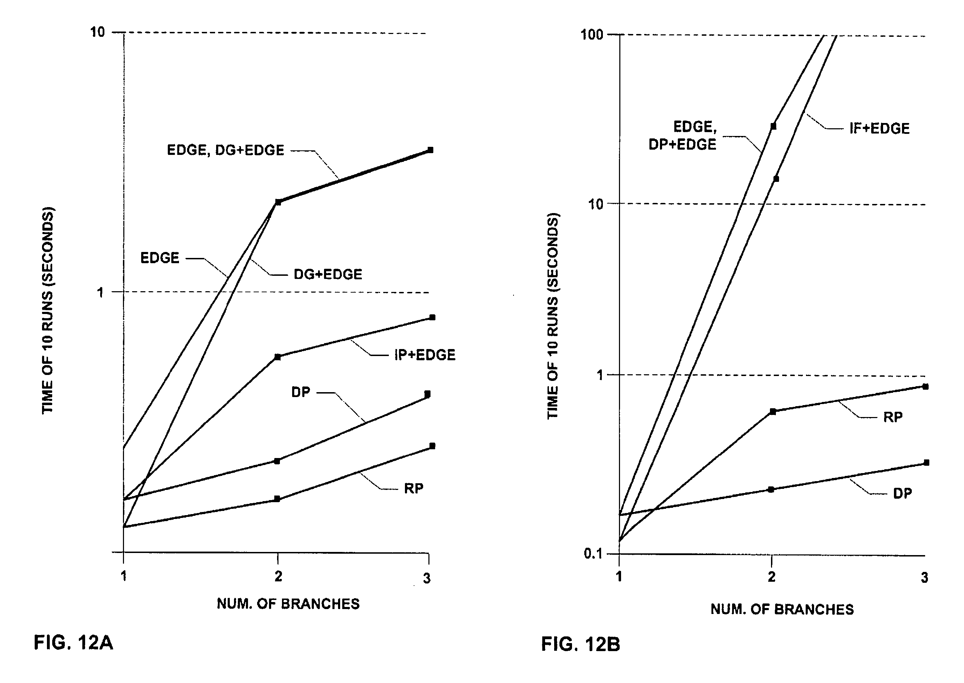

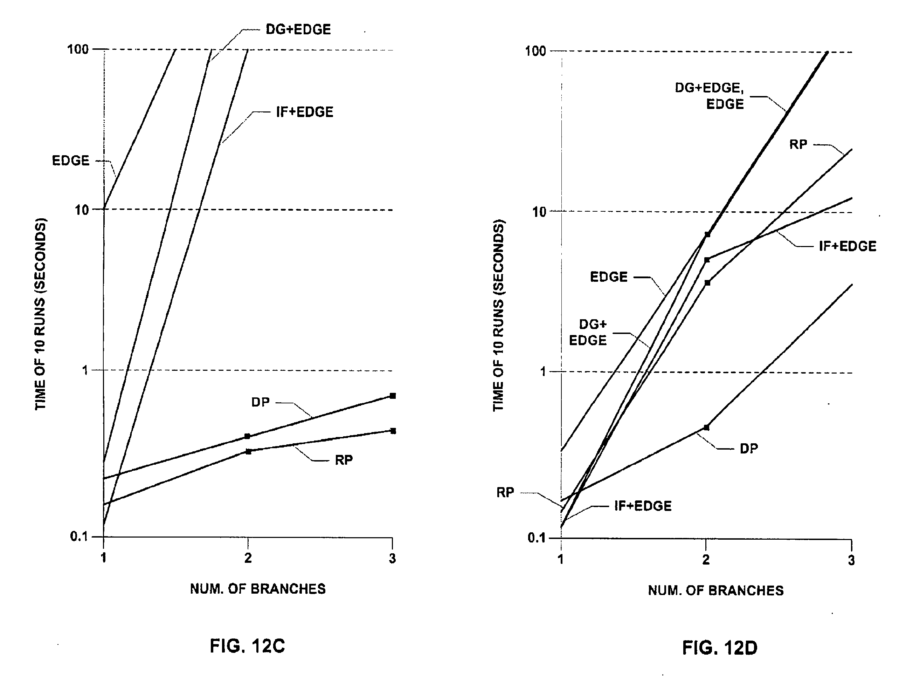

FIGs. 12A, 12B, and 12C show performance results for different groups of queries. ROOTPATHS and DATAPATHS scale gracefully both with respect to the number of branches and with respect to the selectivity of these branches. However, the Index Fabric, DataGuide and Edge approaches perform badly in both regards (note the log time scale on the FIGs. 12 A-D).

ROOTPATHS and DATAPATHS perform so well because they store IdLists. Hence, they can do an index lookup for each path, extract the ids of the branch point from the IdLists, and do a join on the branch points to produce the desired result. With increasingly unselective predicates, more ids will need to be extracted, thereby explaining the slightly higher running times as the selectivity of paths decreases. In all cases, however, the running time of the two approaches is well under a second. The reason that DATAPATHS performs slightly worse than ROOTPATHS in FIG.s 12A and 12C is that in these cases the selectivities are roughly the same and thus the speedup from index-nested-loops join cannot be exploited. (The index-nested-loops join strategy is effective when one branch is selective whereas the other branches are unselective.) Since a sort-merge join is performed for both, DATAPATHS offers no benefit over ROOTPATHS, but is larger and more expensive to access.

In contrast, the performance of the Edge table, DG+Edge, and IF+Edge approaches is many orders of magnitude worse, both when the number of branches increases and when the selectivity of the branches decreases. In fact, for unselective queries with three branches, the execution time for these approaches was more than 10 minutes. This phenomenon occurs because, in the absence of IdLists, these approaches have to perform expensive joins to determine the relationship between the path leaves and the branch points. Since the branch points were high for this set of experiments, they had to perform a 5-way join for each branch. While the joins are expensive enough to do for selective branch queries, performance degrades dramatically in the presence of unselective branches.

It is also interesting to note some of the limitations of relational systems in evaluating many joins. The time that DB2 took to optimise the queries was longer than the time it took to execute the queries using the ROOTPATHS and DATAPATHS approaches (the graphs only show the execution time). Also, the relational optimiser understandably made some wrong decisions for queries with a large number of joins, which further contributed to the bad performance of Index Fabric, DataGuide and Edge. Thus IdLists can prove valuable both for reducing the overhead of performing joins, and also for simplifying the generated query to enable better optimisation.

### Benefit of Index-nested-loop Join

We now vary the branching point of the twig queries so that they branch closer to the leaves (recall that we used branching points close to the root for the previous set of experiments). We use Q10ₓ and Q11ₓ for the XMark data, which have one selective path and other unselective paths, for this set of experiments. The performance results are shown in FIG. 12D. The results for DBLP are similar.

As before, DATAPATHS performs uniformly well, while Index Fabric, DataGuide and Edge perform poorly as the number of branches increase. The performance of these three approaches, while still up to orders of magnitude worse than DATAPATHS, is better than the case when the branches are deeper because the number of joins required to determine the branch point is lower for this set of experiments.

The most surprising result here is the relatively bad performance of ROOTPATHS (it is even worse than IF+Edge at a point). The reason for this degradation of performance is that ROOTPATHS does not support the index-nested-loop join strategy while the other indices do. The index-nested-loop join strategy is much better for this set of queries because (i) one branch is very selective, (ii) other branches are unselective, and (iii) each selective branch matches with only very few unselective branches. Condition (iii) was not satisfied earlier for the queries with deep branches because they branch at nodes closer to the root, which usually have a large number of descendants.

### Recursive Queries

We now examine the performance of evaluating recursive ("//") queries. The recursive queries are exactly the same as queries used in the discussion above regarding Returning IdLists, except that each query now starts with a "//". To examine the overhead for recursive queries, we compare the performance of ROOTPATHS and DATAPATHS for original queries which do not have a recursion. (Other indices cannot be used here.) We found that ROOTPATHS and DATAPATHS have less than 5% overhead for processing queries with a "//" because such queries are advantageously converted into B+-tree prefix match queries on ReverseSchemaPaths.

### Space Optimizations

Although DATAPATHS performs orders of magnitude better than existing approaches, one possible concern is associated space overhead. The lossless compression strategies reduced the space requirement by about 30%, which gives rise to the space requirement shown in FIG. 9. We now study the effects of other *lossy* compression strategies.

We implemented SchemaPaths compression, which reduces the space overhead by an additional 10MB for the XMark data, and has no savings for the DBLP data. For this marginal savings in space, SchemaPaths compression may not prove desirable because it does not support recursive ("//") queries. We implemented HeadId pruning based on workload information (i.e., all queries used in our experiments), and the index size dropped considerably to 141MB (1.4 times the data size) for the XMark data and 38.4MB (77% of data size) for the DBLP data. Note, however, such pruning disables index-nested-loop join for queries not in the workload and branching at other positions. Thus there might be a performance penalty for such queries and so this compression should be used judiciously.

### Comparison with ASRs and Join Indices

We now compare our index structures against ASR and Join Indices. ASR and Join Indices are similar to DATAPATHS in the sense that all of them encode nodes along paths. However, there are three differences between them.

First, both ASR and Join Indices assume the schema is known *a priori.* Therefore, ASR and Join Indices require schema discovery as a pre-requisite step and have manageability problems when new data, not conforming to the previous schema, is added.

Second, our index structures encode both schema and data using the same framework, while ASR and Join Indices encode schema as relation names. This gives our index structures two advantages over ASR and Join Indices. First, this drastically reduces the number of relations and indices, and the management overhead. For example, in order to support *ad hoc* queries, both ASR and Join Indices created 902 and 235 tables for XMark and DBLP respectively. Our index structures each have only one index.

More importantly, indexing schema and data together enables the efficient evaluation of"//" queries, when the recursion matches many subpaths, because both ASR and Join Indices need to access many relations, one for each matching subpath. This is less efficient than accessing a single index structure because in a unified index structure, the cost of accessing the index is logarithmic to the data size, but the cost of accessing many small indices is linear to the number of indices. To investigate this, we ran experiments for the queries shown in FIG. 7B which contain a "//" as branch point and matches six subpaths in the data. Again, we vary the number of branches as well as selectivity of different branches. Q12ₓ and Q13ₓ consist of both selective and unselective branches, and Q14ₓ and Q15ₓ consist of unselective branches. The results for all selective branches are similar, so they are omitted. We also exclude the overhead to decide which relations to access for ASR and Join Indices. So their real performance would be worse than shown here.

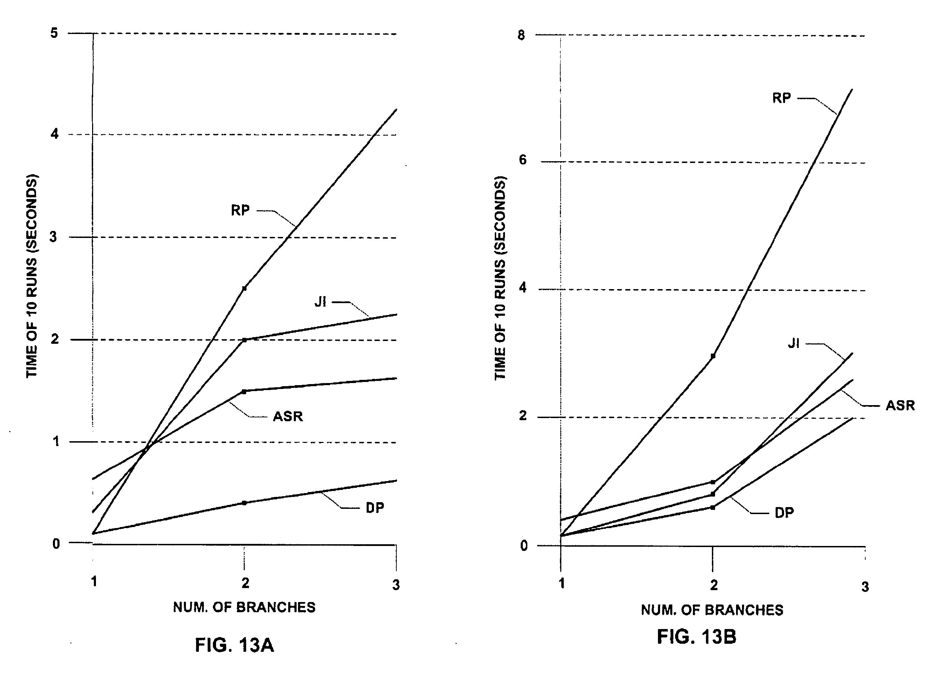

FIG. 13 shows the results. The performance of Edge table, DG+Edge, and IF+Edge are not shown because they are about an order worse than our index structures. The results show that the performance of DATAPATHS is up to a factor of 5 better than ASR and Join Indices because the latter techniques have to access 6 different relations to retrieve a single branch in the query. This difference decreases as the queries contain only unselective branches, because now the cost of joining these branches dominates the cost of index access. ROOTPATHS has bad performance because index-nested-loops join is much more efficient than merge join for these queries.

Note that the same argument applies to other index structures that answer a recursive query by translating the recursion into several equality path conditions (e.g., XRel). Hence we do not compare our index structures with these indices.

Finally, ASRs and Join Indices require more space than DATAPATHS. ASR uses more space because it cannot compress IdLists, which are stored in separate columns. However, the space saving is less than that achieved by the differential encoding of IdLists (i.e., 30% noted above under *Space Optimisations)* because DATAPATHS need to store SchemaPath. Join Index needs even more space than ASRs for the following reason. Join Index only store the starting and ending node id along a subpath. In order to return intermediate nodes on this path, Join indices have to support both forward lookup to return the ending node and backward lookup to return the starting node. As a result, Join Indices need to build two B+-tree indices per subpath, while ASRs only need to build one.

### Conclusion

We have described a family of index structures, with different space-time tradeoffs, for the efficient evaluation of ad hoc, recursive, twig queries. The proposed index structures are enabled by a simple relational representation of the XML data paths. This permits conventional use of existing relational index structures (e.g., B+-trees) for the twig indexing problem, and can thus be tightly coupled with a relational optimiser and query evaluator. The good performance of our proposed techniques can be attributed, *inter alia,* to the following factors: (i) combined indexing of XML schema paths and data values, (ii) use of IdLists to determine branch points, and (iii) support for general relational query processing strategies (such as index-nested-loops join). Based on our experiments using the DBLP dataset and the XMark benchmark, we determined that these new index structures outperform the use of existing indices by orders of magnitude for most twig queries, while remaining competitive for single-path (non-branching) queries.

This enhanced performance improvement comes at the cost of some additional index space, and higher index update costs. Updating the ROOTPATHS and DATAPATHS indices requires updating multiple index entries. For example, for ROOTPATHS, inserting an author with a certain name to an existing book requires inserting all prefixes of the "/book/author/name" path. However, ROOTPATHS and DATAPATHS themselves could be used to speed up the lookup of the entries to update. For example, if we want to delete an author with a certain name from an existing book (whose ID is known) from ROOTPATHS, we could use the author name and the schema path "/book/author/name" to locate the authors with the given name, and extract the book IDs from the matching entries to examine whether the book ID matches the book ID to delete. Note that using Edge table, DataGuide, or Index Fabric all requires joins to locate the index entries.

While particular compression strategies have been described and analysed, those skilled in the art will recognize that other particular index space compression strategies (e.g., dictionary encoding the leaf values) will be used in particular embodiments of the present invention. While particular tree structures have been described above, those skilled in the art will find that multi-dimensional access methods, such as R-trees, can be employed to deal with complex conditions on values and thus index a larger class of XML path expressions.

The term *XML document* (and databases containing such documents) as used herein should be understood to include documents of all types, as is understood in the art. Illustrative example documents and databases described herein are chosen for ease of explanation and are but a few of the types with which the present invention can be used. While the term *schema* path(s) has been used in some of the examples presented above associated with nodes along the path proceeding in the direction from root to leaves, it will be understood that the term will include *reverse schema* path(s). The term *reverse schema* path(s) will be reserved for *schema* paths that proceed in the direction from leaves to root. The term *HeadID* has been used in the present description to indicate the node at start of the data path, it should be understood that when a schema path is a *reverse schema* path, the associated HeadID is conveniently the node nearest the root in the path, as illustrated in FIG. 6. IdList is the list of all node ids along the schema path except for the HeadId - regardless of whether the schema path is a reverse schema or not.

## Claims

1. A computer-implemented method for indexing a tree-structured database, *D*, in an electronic database system storing a plurality of electronic XML documents, the tree-structured database *D* comprising an ordered plurality of nodes, said nodes in the tree-structured database *D* being selected from the group comprising element nodes, attribute nodes and value nodes, each of said nodes in the tree-structured database *D* having a respective node id, said nodes in the tree-structured database *D* being selectively connected by edges, a data path in the tree-structured database *D* comprising one or more edges, the tree-structured database *D* including at least one root node, a plurality of leaf nodes, and a plurality of root-to-leaf paths, each data path in the tree-structured database *D* comprising a schema path and, when a data path in the tree-structured database *D* reaches a leaf node, a leaf value, said element nodes having respective tags, said attribute nodes having respective attribute names, said schema path comprising only element tags and attribute names, the method comprising
generating in a relational database system a relational representation of data paths that are subpaths of said root-to-leaf paths, each said data path being associated with the node at which it is rooted, said representation of subpaths comprising SchemaPath, LeafValue, and IdList information for each respective subpath, where SchemaPath comprises element tags and attribute names present along said data path, where LeafValue comprises values of leaves, where IdList is the list of all node ids along the schema path, except for the HeadId, and where HeadId is the node id of the node at the start of the data path,
after generating said relational representation, generating an index based on the concatenation of LeafValue and the reverse of SchemaPath, said index returning at least a portion of said IdList for each data path being represented in said relational representation, and
storing said index for use with said relational database system.

2. The method of claim 1 wherein said index is a B+-tree index.

3. The method of claim 1 wherein said data paths are parent-child (PC) data paths.

4. The method of claim 1 wherein said concatenation of LeafValue and the reverse of SchemaPath includes only the concatenation of LeafValue and prefixes of subpaths of said root-to-leaf paths that start at root.

5. The method of claim 1 wherein said concatenation further includes HeadId.

6. The method of claim 1 wherein said concatenation of LeafValue and the reverse of SchemaPath includes concatenation of LeafValue and all subpaths of said root-to-leaf paths.

7. The method of claim 1 wherein said index returns the entire IdList for each data path having a representation in said set of representations.

8. The method of claim 1 further comprising compressing IdLists.

9. The method of claim 8 wherein said compressing comprises differentially encoding said IdLists.

10. The method of claim 1 further comprising compressing schema paths.

11. The method of claim 10 wherein said compressing comprises performing dictionary encoding of each of said schema paths into integer ids.

## Patentansprüche

1. Computerimplementiertes Verfahren zur Indizierung einer Baumstruktur-Datenbank D in einem elektronischen Datenbanksystem, das eine Vielzahl von elektronischen XML-Dokumenten speichert, wobei die Baumstruktur-Datenbank D eine geordnete Vielzahl von Knoten umfasst, wobei die Knoten in der Baumstruktur-Datenbank D aus der Gruppe gewählt sind, die Elementknoten, Attributknoten und Wertknoten umfasst, wobei jeder der Knoten in der Baumstruktur-Datenbank D eine jeweilige Knotenidentifikation hat, wobei die Knoten in der Baumstruktur-Datenbank D durch Kanten selektiv verbunden sind, wobei ein Datenpfad in der Baumstruktur-Datenbank D eine oder mehrere Kanten aufweist, wobei die Baumstruktur-Datenbank D zumindest einen Wurzelknoten, eine Vielzahl von Blattknoten und eine Vielzahl von Wurzel-zu-Blatt-Pfaden aufweist, wobei jeder Datenpfad in der Baumstruktur-Datenbank D einen Schemapfad und, wenn ein Datenpfad in der Baumstruktur-Datenbank D einen Blattknoten erreicht, einen Blattwert umfasst, wobei die Elementknoten jeweilige Tags haben, die Attributknoten jeweilige Attributnamen haben und der Schemapfad nur Elementtags und Attributnamen umfasst, wobei das Verfahren umfasst:
in einem relationalen Datenbanksystem erfolgendes Erzeugen einer relationalen Darstellung von Datenpfaden, die Unterpfade der Wurzel-zu-Blatt-Pfade sind, wobei jeder Datenpfad dem Knoten zugeordnet ist, in dem er verwurzelt ist, wobei die Darstellung von Unterpfaden SchemaPath-, LeafValue- und IdList-Information für jeden jeweiligen Unterpfad umfasst, wo SchemaPath Elementtags und Attributnamen umfasst, die entlang des Datenpfads vorhanden sind, wo LeafValue Werte von Blättern umfasst, wo IdList die Liste aller Knotenidentifikationen entlang des Schemapfads mit Ausnahme der HeadId ist und wo HeadId die Knotenidentifikation des Knotens am Anfang des Datenpfads ist,
nach Erzeugung der relationalen Darstellung erfolgendes Erzeugen eines Indexes, der auf der Verkettung von LeafValue und der Umkehrung von SchemaPath beruht, wobei der Index zumindest einen Abschnitt des IdList für jeden Datenpfad rückmeldet, der in der relationalen Darstellung dargestellt ist, und
Speichern des Indexes zur Verwendung mit dem relationalen Datenbanksystem.

2. Verfahren nach Anspruch 1, wobei der Index ein B+-Baum-Index ist.

3. Verfahren nach Anspruch 1, wobei die Datenpfade Elternteil-Kind-(PC-)Datenpfade sind.

4. Verfahren nach Anspruch 1, wobei die Verkettung von LeafValue und der Umkehrung von SchemaPath nur die Verkettung von LeafValue und Präfixe von Unterpfaden der Wurzel-zu-Blatt-Pfade, die an einer Wurzel beginnen, aufweist.

5. Verfahren nach Anspruch 1, wobei die Verkettung ferner HeadId aufweist.

6. Verfahren nach Anspruch 1, wobei die Verkettung von LeafValue und der Umkehrung von SchemaPath eine Verkettung von LeafValue und allen Unterpfaden der Wurzel-zu-Blatt-Pfade aufweist.

7. Verfahren nach Anspruch 1, wobei der Index das gesamte IdList für jeden Datenpfad mit einer Darstellung in dem Satz von Darstellungen rückmeldet.

8. Verfahren nach Anspruch 1, ferner umfassend: Komprimieren von IdLists.

9. Verfahren nach Anspruch 8, wobei die Komprimierung differentielles Codieren der IdLists umfasst.

10. Verfahren nach Anspruch 1, ferner umfassend: Komprimieren von Schemapfaden.

11. Verfahren nach Anspruch 10, wobei das Komprimieren umfasst: Durchführen von Wörterbuchcodierung jedes der Schemapfade zu ganzzahligen Identifikationen.

## Revendications

1. Procédé mis en oeuvre dans un ordinateur pour indexer une base de données à structure arborescente, *D,* dans un système de base de données électronique stockant une pluralité de documents XML électroniques, la base de données à structure arborescente *D* comportant une pluralité ordonnée de noeuds, lesdits noeuds dans la base de données à structure arborescente *D* étant sélectionnés dans le groupe comportant des noeuds d'élément, des noeuds d'attribut et des noeuds de valeur, chacun desdits noeuds dans la base de données à structure arborescente *D* présentant un identifiant (id) de noeud respectif, lesdits noeuds dans la base de données à structure arborescente *D* étant connectés de manière sélective par des bords, un chemin de données dans la base de données à structure arborescente *D* comportant un ou plusieurs bords, la base de données à structure arborescente *D* comportant au moins un noeud racine, une pluralité de noeuds feuille, et une pluralité de chemins « de racine à feuille », chaque chemin de données dans la base de données à structure arborescente *D* comportant un chemin de schéma et, lorsqu'un chemin de données, dans la base de données à structure arborescente *D,* atteint un noeud feuille, une valeur de feuille, lesdits noeuds d'élément présentant des balises respectives, lesdits noeuds d'attribut présentant des noms d'attribut respectifs, ledit chemin de schéma comportant uniquement des balises d'élément et des noms d'attribut, le procédé comportant les étapes ci-après consistant à :
générer, dans un système de base de données relationnelle, une représentation relationnelle de chemins de données qui sont des sous-chemins desdits chemins « de racine à feuille », chaque chemin de données étant associé au noeud auquel il est ancré, ladite représentation de sous-chemins comportant des informations de chemin de schéma « SchemaPath », de valeur de feuille « LeafValue », et de liste d'identifiants « IdList » pour chaque sous-chemin respectif, où le chemin de schéma « SchemaPath » comporte des balises d'élément et des noms d'attributs présents le long dudit chemin de données, où la valeur de feuille « LeafValue » comporte des valeurs de feuilles, où la liste d'identifiants « IdList » est la liste de tous les identifiants de noeuds le long du chemin de schéma, à l'exception de l'identifiant « HeadId », et où l'identifiant « HeadId » est l'identifiant de noeud du noeud qui se situe au début du chemin de données,
après avoir généré ladite représentation relationnelle, générer un index sur la base de la concaténation de la valeur de feuille « LeafValue » et de l'inverse du chemin de schéma « SchemaPath », ledit index renvoyant au moins une partie de ladite liste d'identifiants « IdList » pour chaque chemin de données qui est représenté dans ladite représentation relationnelle, et
stocker ledit index en vue d'une utilisation avec ledit système de base de données relationnelle.

2. Procédé selon la revendication 1, dans lequel ledit index est un index d'arborescence « B+- ».

3. Procédé selon la revendication 1, dans lequel lesdits chemins de données sont des chemins de données parent - enfant (PC).

4. Procédé selon la revendication 1, dans lequel ladite concaténation de la valeur de feuille « LeafValue » et de l'inverse du chemin de schéma « SchemaPath » comporte uniquement la concaténation de la valeur de feuille « LeafValue » et des préfixes de sous-chemins desdits chemins « de racine à feuille » qui commencent à la racine.

5. Procédé selon la revendication 1, dans lequel ladite concaténation comporte en outre l'identifiant « HeadId ».

6. Procédé selon la revendication 1, dans lequel ladite concaténation de la valeur de feuille « LeafValue » et de l'inverse du chemin de schéma « SchemaPath » comporte une concaténation de la valeur de feuille « LeafValue » et de tous les sous-chemins desdits chemins « de racine à feuille ».

7. Procédé selon la revendication 1, dans lequel ledit index renvoie l'ensemble de la liste d'identifiants « IdList » pour chaque chemin de données présentant une représentation dans ledit ensemble de représentations.

8. Procédé selon la revendication 1, comportant en outre l'étape consistant à compresser des listes d'identifiant « IdLists ».

9. Procédé selon la revendication 8, dans lequel ladite étape de compression comporte l'étape consistant à coder de manière différentielle lesdites listes d'identifiants « IdLists ».

10. Procédé selon la revendication 1, comportant en outre l'étape consistant à compresser des chemins de schéma.

11. Procédé selon la revendication 10, dans lequel ladite étape de compression comporte l'étape consistant à mettre en oeuvre un codage de dictionnaire de chacun desdits chemins de schéma dans des identifiants entiers.
